# EUROPÄISCHE PATENTSCHRIFT

(11) **EP 4 208 509 B1**
(45) Veröffentlichungstag und Bekanntmachung des Hinweises auf die Patenterteilung: **28.02.2024**
(21) Anmeldenummer: 20765003.7
(22) Anmeldetag: 01.09.2020
(51) Int. Cl.: C08L 83/08, C08G 77/38, C08L 83/04

(54) **VERNETZBARE MASSEN AUF DER BASIS VON ORGANOSILICIUMVERBINDUNGEN**
CROSS-LINKABLE COMPOSITIONS BASED ON ORGANOSILICON COMPOUNDS
MATIÈRES RÉTICULABLES À BASE DE COMPOSÉS ORGANOSILICIÉS

(43) Veröffentlichungstag der Anmeldung: 12.07.2023
(73) Patentinhaber: Wacker Chemie AG, 81737 München (DE)
(72) Erfinder: SCHÖLEY, Peter, 01665 Diera-Zehren (DE); SCHEIM, Uwe, 01640 Coswig (DE)
(74) Vertreter: Belz, Ferdinand
(86) Internationale Anmeldenummer: PCT/EP2020/074337
(87) Internationale Veröffentlichungsnummer: WO 2022/048730

(56) Entgegenhaltungen:
- CN-B- 103 484 056

## Beschreibung

Die Erfindung betrifft durch Kondensationsreaktion vernetzbare Massen auf der Basis von Organosiliciumverbindungen, Verfahren zu deren Herstellung und deren Verwendung als Dichtstoffe, insbesondere zur Verfügung von Natursteinen.

Unter Ausschluss von Wasser lagerfähige, bei Zutritt von Wasser bei Raumtemperatur unter Abspaltung von Alkoholen zu Elastomeren aushärtende Einkomponenten-Dichtmassen (RTV1-Dichtmassen), sind bereits bekannt. Diese Produkte werden in großen Mengen beispielsweise in der Bauindustrie eingesetzt. Die Basis dieser Mischungen sind Organopolysiloxane, die Alkoxygruppen als hydrolysierbare, reaktive Substituenten tragen. Diese reaktiven Polydimethylsiloxane werden in der Regel durch ein sogenanntes Endcapping, das ist die Umsetzung OH-endständiger Polydimethylsiloxane mit Organyloxysilanen in Gegenwart von Katalysatoren, hergestellt. Hierzu sei z.B. auf US-A 5,055,502 verwiesen. Zur Unterdrückung von Folgereaktionen des Endcappings (Kettenverlängerung und Vernetzung) müssen die Organyloxysilane stets in großem Überschuss, bezogen auf die OH-Gruppen des OH-terminierten Polydimethylsiloxanen, eingesetzt werden. Das hat zur Folge, dass diese Organyloxy-Polymere immer überschüssige Organyloxysilane enthalten. Es hat sich auch gezeigt, dass ein Endcapping in der Regel nur mit sehr reaktiven Organyloxysilanen wie Methyltrimethoxysilan oder Vinyltrimethoxysilan durchgeführt werden kann, ohne dass Äquilibrierungen auftreten.

Andere auch verwendete, reaktive Silane sind Methyltriethoxysilan (MTEO) oder Vinyltriethoxysilan (VTEO). Diese beiden letztgenannten Silane sind aber schon so wenig reaktiv, dass sie beim Endblockieren von langkettigen OH-terminierten Polydimethylsiloxanen nur beschränkt eingesetzt werden können, wie US-B2 10647822 entnommen werden kann. Diese Silane finden aber sehr wohl Anwendung als zusätzliche Additive wie z.B. als Wasserfänger zur Erhöhung der Lagerstabilität oder auch als Trägermaterial von weiteren Wirkstoffen wie z.B. Stabilisatoren oder Katalysatoren.

Das Anforderungsprofil an RTV1-Dichtmassen ist breit gefächert, insbesondere werden aber Produkte gewünscht, die nach einer gewissen Verarbeitungszeit möglichst schnell aushärten. Neben den in der RTV1-Dichtmasse verwendeten Katalysatoren ist dabei vor allem die Reaktivität der eingesetzten Vernetzer entscheidend. Insbesondere die üblicherweise eingesetzten Zinn- und Titanverbindungen führen nachteilig zu Lagerstabilitätsproblemen oder zu ungewollten Vergilbungen. Man ist daher bestrebt, die Einsatzmengen von Katalysatoren in der RTV1-Dichtmasse zu beschränken. Allerdings ist man dann um so mehr auf den Einsatz sehr reaktiver Silane angewiesen.

Des Weiteren können diese Dichtmassen Füllstoffe, Weichmacher, Vernetzer sowie verschiedene Additive enthalten.

Zusätzlich ist es üblich, funktionalisierte Alkylsilane als sogenannte Haftvermittler zu verwenden. Ein typisches Beispiel dafür ist der Einsatz von Aminopropyltrimethoxysilan.

Selbstverständlich können auch all diese neben Methyltrimethoxysilan zusätzlich in den RTV1-Dichtmassen enthaltenen Alkoxysilane die Aushärtungseigenschaften wie Hautbildungszeit, Frühfestigkeit und Durchhärtung beeinflussen. Dieser Einfluss ist jedoch sehr gering und kann in der Regel vernachlässigt werden. Allerdings kommt es bei der Verwendung dieser Silane bei den beschriebenen RTV1-Dichtmassen zu Nachteilen bei der Herstellung, bei der Lagerung und bei der Anwendung.

Ein entscheidender Nachteil bisher bekannter RTV1-Dichtmassen besteht darin, dass bei Verfugungen an die RTV1-Dichtmasse angrenzende Substrate, insbesondere Natursteine, verschmutzt werden können. Hauptsächlich wird das durch nicht in die Polymermatrix eingebundene Weichmacher verursacht. Sie können aus der Dichtmasse auswandern und bilden an der Kontaktfläche zum Substrat einen dunkel gefärbten, fettig erscheinenden Rand.

Eine bekannte Lösung für dieses Probleme ist die Verwendung von sehr kurzkettigen Weichmachern, wie in DE-B 102 27 590 offenbart. Es hat sich jedoch gezeigt, dass es eine weitere Art der Verschmutzung gibt, die erst zutage tritt, wenn das Substrat nass wird. An die Dichtmasse angrenzende Bereiche werden so stark hydrophob, dass sie nicht durch das Wasser benetzt werden und sich dann deutlich farblich heller vom Rest des Substrates abheben. Dieses Phänomen ist unabhängig davon, welcher Weichmacher eingesetzt wird. Er tritt auch auf, wenn überhaupt keine Weichmacher zugesetzt werden.

Im Gegensatz zu den oben beschriebenen sehr reaktiven Organyloxysilanen sind Organyloxysilane mit hohen Molekulargewichten gekennzeichnet durch geringe Reaktivitäten, denn sie weisen sowohl langkettige, direkt an Silizium gebundene Organylreste auf, als auch langkettige Organyloxyreste.

CN 103 484 056 B offenbart eine durch Kondensationsreaktion vernetzbare Masse, herstellbar unter Verwendung von einem Organopolysiloxan mit Dialkoxysilyl- oder Trialkoxysilyl-Gruppen an beiden Enden und einer Viskosität größer als 6 Pa.s, Morpholinylmethyltrimethoxysilan, einem Zinnkatalysator und einem oder mehreren funktionellen Alkoxysilanen.

Gegenstand der Erfindung sind durch Kondensationsreaktion vernetzbare Massen, herstellbar unter Verwendung von
(A) Organopolysiloxanen der Formel

   (R²O)₃₋ₐSiR¹ₐO(SiR₂O)ₙSiR¹ₐ(OR²)₃₋ₐ (I),

   wobei
   R gleich oder verschieden sein kann und einwertige, gegebenenfalls substituierte Kohlenwasserstoffreste bedeutet, R¹ gleich oder verschieden sein kann und einwertige, gegebenenfalls substituierte Kohlenwasserstoffreste bedeutet, R² gleich oder verschieden sein kann und einwertige, gegebenenfalls substituierte Kohlenwasserstoffreste bedeutet, a gleich oder verschieden sein kann und 0 oder 1, bevorzugt 1, ist und
   n eine ganze Zahl von 380 bis 2000 ist,
   mit der Maßgabe, dass die Viskosität bestimmt nach der in der Beschreibung angegebenen Methode bei 25°C größer oder gleich 6000 mPas ist und es sich bei R¹ um Phenylrest, Rest-CH₂-NR^{6'}R^{5'} oder den Rest CH₂NR^{11'} handelt, wobei R^{5'} Kohlenwasserdtoffreste mit 1 bis 12 Kohlenstoffatomen bedeutet,
   R^{6'} Wasserstoffatom oder Rest R^{5'} bedeutet und R^{11'} zweiwertige Kohlenwasserstoffreste, die mit Heteroatomen unterbrochen sein können, bedeutet,
(B1) Silanen der Formel

   R³_{4-b}(R⁴O)_{b}Si (II),

   worin
   R³ gleich oder verschieden sein kann und einen einwertigen, SiC-gebundenen, gegebenenfalls substituierten Kohlenwasserstoffrest bedeutet,
   R⁴ gleich oder verschieden sein kann und einen einwertigen, gegebenenfalls substituierten Kohlenwasserstoffrest bedeutet und
   b 2, 3 oder 4, bevorzugt 2 oder 3, ist,
   ) mit der Maßgabe, dass das Molekulargewicht der Silane der Formel (II) größer 195 g/mol ist,
   und gegebenenfalls
) (B2) Siliciumverbindungen bestehend aus Einheiten der Formel

   R⁷_{c}(R⁸O)_{d}SiO_{(4-c-d)/2} (III),

   worin
   R⁷ gleich oder verschieden sein kann und einen einwertigen, SiC-gebundenen, gegebenenfalls substituierten Kohlenwasserstoffrest bedeutet,
   R⁸ gleich oder verschieden sein kann und einen einwertigen, gegebenenfalls substituierten Kohlenwasserstoffrest bedeutet,
   c 0, 1 oder 2 ist und
   d 0, 1, 2 oder 3 ist,
   mit der Maßgabe, dass in Formel (III) die Summe c+d≤3 ist, in den Siliciumverbindungen mindestens 2 Gruppen (R⁸O) anwesend sind und die Viskosität bei 25°C kleiner 2000 mPas ist,
   mit der Maßgabe, dass die erfindungsgemäßen Massen Organosiliciumverbindungen mit einem Molekulargewicht von kleiner oder gleich 195 g/mol maximal in Mengen kleiner 0,5 Gew.-%, bevorzugt in Mengen kleiner 0,1 Gew.-%, jeweils bezogen auf Organopolysiloxan (A), enthalten.

Beispiele für Reste R sind Alkylreste, wie der Methyl-, Ethyl-, n-Propyl, iso-Propyl-, 1-n-Butyl-, 2-n-Butyl-, iso-Butyl-, tert.-Butyl-, n-Pentyl-, iso-Pentyl-, neo-Pentyl-, tert.-Pentylrest; Hexylreste, wie der n-Hexylrest; Heptylreste, wie der n-Heptylrest; Octylreste, wie der n-Octylrest und iso-Octylreste, wie der 2,2,4-Trimethylpentylrest; Nonylreste, wie der n-Nonylrest; Decylreste, wie der n-Decylrest; Dodecylreste, wie der n-Dodecylrest; Octadecylreste, wie der n-Octadecylrest; Cycloalkylreste, wie der Cyclopentyl-, Cyclohexyl-, Cycloheptylrest und Methylcyclohexylreste; Alkenylreste, wie der Vinyl-, 1-Propenyl- und der 2-Propenylrest; Arylreste, wie der Phenyl-, Naphthyl-, Anthryl- und Phenanthrylrest; Alkarylreste, wie o-, m-, p-Tolylreste; Xylylreste und Ethylphenylreste; und Aralkylreste, wie der Benzylrest, der der α- und der β-Phenylethylrest.

Bevorzugt handelt es sich bei den Resten R um einwertige Kohlenwasserstoffreste mit 1 bis 18 Kohlenstoffatomen, besonders bevorzugt um Methyl, Vinyl- oder Phenylrest, insbesondere um den Methylrest.

Beispiele für Reste R¹ sind Phenylrest, Rest -CH₂-NR^{6'}R^{5'} oder der Rest CH₂NR^{11'}, wobei R^{5'} Kohlenwasserstoffreste mit 1 bis 12 Kohlenstoffatomen bedeutet, R^{6'} Wasserstoffatom oder Rest R^{5'} bedeutet und R^{11'} zweiwertige Kohlenwasserstoffreste, die mit Heteroatomen unterbrochen sein können, bedeutet.

Insbesondere handelt es sich bei Rest R¹ um Rest -CH₂-NR^{6'}R^{5'} oder Rest CH₂NR^{11'} mit R^{5'}, R^{6'} und R^{11'} gleich der oben genannten Bedeutung, ganz besonders bevorzugt um -CH₂-N[(CH₂)₂]₂O, -CH₂-N(Bu)₂ oder -CH₂-NH(cHex), wobei Bu n-Butylrest und cHex Cyclohexylrest bedeutet.

Beispiele für Reste R⁵ und R^{5'} sind unabhängig voneinander die für R angegebenen Kohlenwasserstoffreste.

Bevorzugt handelt es sich bei Rest R⁵ und R^{5'} unabhängig voneinander um den Methyl-, Ethyl-, iso-Propyl-, n-Propyl-, n-Butyl-, cyclo-Hexyl- oder Phenylrest, besonders bevorzugt um den n-Butylrest.

Beispiele für Kohlenwasserstoffreste R⁶ und R^{6'} sind unabhängig voneinander die für R angegebenen Kohlenwasserstoffreste.

Bevorzugt handelt es sich bei Rest R⁶ und R^{6'} unabhängig voneinander um Wasserstoffatom, den Methyl-, Ethyl-, iso-Propyl-, n-Propyl-, n-Butyl- oder cyclo-Hexylrest, besonders bevorzugt um den n-Butylrest.

Beispiele für zweiwertige Reste R¹¹ und R^{11'} sind unabhängig voneinander Alkylenreste, wie der Propan-1,3-diyl-, Butan-1,4-diyl-, Butan-1,3-diyl-, 2-Methylpropan-1,3-diyl-, Pentan-1,5-diyl-, Pentan-1,4-diyl-, 2-Methylbutan-1,4-diyl-, 2,2-Dimethylpropan-1,3-diyl-, Hexan-1,6-diyl-, Heptan-1,7-diyl-, Octan-1,8-diyl- und 2-Methylheptan-1,7-diyl und 2,2,4-Trimethylpentan-1,5-diylrest; Alkenylenreste, wie der Propen-1,3-diylrest, sowie Reste -CH₂-CH₂-O-CH₂-CH₂- und -CH₂-CH₂-NH-CH₂-CH₂-.

Bevorzugt handelt es sich bei Rest R¹¹ und R^{11'} unabhängig voneinander um zweiwertige Kohlenwasserstoffreste mit 4 bis 6 Kohlenstoffatomen, die mit Heteroatomen, bevorzugt Sauerstoff -O- oder Stickstoff -NH-, unterbrochen sein können, besonders bevorzugt um CH₂-CH₂-O-CH₂-CH₂-.

Beispiele für Reste R² sind die für R angegebenen einwertigen Reste.

Bevorzugt handelt es sich bei den Resten R² um Alkylreste mit 1 bis 12 Kohlenstoffatomen, besonders bevorzugt um Methyl-, Ethyl-, n-Propyl- oder iso-Propylreste, insbesondere um den Methyl- oder den Ethylrest.

Bevorzugt handelt es sich bei den erfindungsgemäß eingesetzten Organopolysiloxanen (A) um
(MeO)₂Si(Ox)O(SiMe₂O)₃₀₋₂₀₀₀Si(Ox)(OMe)₂,
(MeO)₂Si(DBA)O(SiMe₂O)₃₀₋₂₀₀₀Si(DBA)(OMe)₂,
(MeO)₂Si(cHx)O(SiMe₂O)₃₀₋₂₀₀₀Si(cHx)(OMe)₂,
(MeO)₂Si(R³)O(SiMe₂O)₇₀₀Si(R³)(OMe)₂,
(EtO)₂Si(Ox)O(SiMe₂O)₃₀₋₂₀₀₀Si(Ox)(OEt)₂,
(EtO)₂Si(DBA)O(SiMe₂O)₃₀₋₂₀₀₀Si(DBA)(OEt)₂,
(EtO)₂Si(cHx)O(SiMe₂O)₃₀₋₂₀₀₀Si(cHx)(OEt)₂ oder
(EtO)₂Si(R¹)O(SiMe₂O)₇₀₀Si(R¹)(OEt)₂, besonders bevorzugt um (EtO)₂Si(Ox)O(SiMe₂O)₃₀₋₂₀₀₀Si(Ox)(OEt)₂,
(EtO)₂Si(DBA)O(SiMe₂O)₃₀₋₂₀₀₀Si(DBA)(OEt)₂ oder
(EtO)₂Si(cHx)O(SiMe₂O)₃₀₋₂₀₀₀Si(cHx)(OEt)₂, insbesondere um
(EtO)₂Si(Ox)O(SiMe₂O)₃₀₋₂₀₀₀Si(Ox)(OEt)₂, worin Me gleich Methylrest, Et gleich Ethylrest, Ox gleich CH₂-N[(CH₂)₂]₂O, DBA gleich -CH₂-N(nBu)₂, cHx gleich CH₂-NH(cHex), Bu gleich n-Butylrest und cHex gleich Cyclohexylrest ist sowie R¹ Me, Et, Vinylrest, Phenylrest, DBA, Ox oder cHx bedeutet und innerhalb der einzelnen Verbindungen eine identische Bedeutung hat.

Die erfindungsgemäß eingesetzten Organopolysiloxane (A) haben eine Viskosität von bevorzugt 6000 bis 350000 mPas, besonders bevorzugt von 20000 bis 120000 mPas, jeweils bei 25°C.

Bei den Organopolysiloxanen (A) handelt es sich um handelsübliche Produkte bzw. können diese nach in der Siliciumchemie gängigen Methoden hergestellt werden.

Beispiele für Reste R³ sind die für R angegebenen Reste.

Bevorzugt handelt es sich bei den Resten R³ um lineare, verzweigte oder cyclische Kohlenwasserstoffreste mit 1 bis 16 Kohlenstoffatomen oder um einwertige, am Kohlenstoffatom, das an das Siliciumatom gebunden ist, mit Aminogruppen substituierte Kohlenwasserstoffreste mit 1 bis 12 Kohlenstoffatomen, besonders bevorzugt um lineare, verzweigte oder cyclische Alkylreste mit 1 bis 8 Kohlenstoffatomen, Vinylrest, Phenylrest, Rest -CH₂-NR^{6'}R^{5'} oder den Rest CH₂NR^{11'}, wobei R^{5'} Kohlenwasserstoffreste mit 1 bis 12 Kohlenstoffatomen bedeutet, R^{6'} Wasserstoffatom oder Rest R^{5'} bedeutet und R^{11'} zweiwertige Kohlenwasserstoffreste, die mit Heteroatomen unterbrochen sein können, bedeutet.

Beispiele für Reste R⁴ sind die für R angegebenen Reste.

Bevorzugt handelt es sich bei den Resten R⁴ um Methyl-, Ethyl-, n-Propyl-, Isopropyl-, n-Butyl-, s-Butyl- oder Isobutylrest, besonders bevorzugt um Ethyl-, n-Propyl- oder Isopropylrest.

Beispiele für erfindungsgemäß gegebenenfalls eingesetzte Komponente (B1) sind n-Hexyltrimethoxysilan, n-Heptyltrimethoxysilan, n-Octyltrimethoxysilan, n-Nonyltrimethoxysilan, n-Decyltrimethoxysilan, n-Hexadecyltrimethoxysilan, Cyclohexyltrimethoxysilan, Phenyltrimethoxysilan, n-Propyltriethoxysilan, n-Butyltriethoxysilan, n-Pentyltriethoxysilan, n-Hexyltriethoxysilan, n-Heptyltriethoxysilan, n-Octyltriethoxysilan, n-Nonyltriethoxysilan, n-Decyltriethoxysilan, n-Hexadecyltriethoxysilan, Cyclohexyltriethoxysilan, Phenyltriethoxysilan, Methyltrin-propoxysilan, Ethyltri-n-propoxysilan, n-Propyltri-n-propoxysilan, n-Butyltri-n-propoxysilan, n-Pentyltri-n-propoxysilan, n-Hexyltri-n-propoxysilan, n-Heptyltri-n-propoxysilan, n-Octyltri-n-propoxysilan, n-Nonyltri-n-propoxysilan, n-Decyltri-n-propoxysilan, n-Hexadecyltri-n-propoxysilan, Cyclohexyltri-n-propoxysilan, Phenyltri-n-propoxysilan, Methyltriisopropoxysilan, Ethyltriisopropoxysilan, n-Propyltriisopropoxysilan, n-Butyltriisopropoxysilan, n-Pentyltriisopropoxysilan, n-Hexyltriisopropoxysilan, n-Heptyltriisopropoxysilan, n-Octyltriisopropoxysilan, n-Nonyltriisopropoxysilan, n-Decyltriisopropoxysilan, n-Hexadecyltriisopropoxysilan, Cyclohexyltriisopropoxysilan, Phenyltriisopropoxysilan, 2,2,4-Trimethylpentyltrimethoxysilan, Tetraethoxysilan, Tetra-n-propoxysilan, Tetraisopropoxysilan, 2,2,4-Trimethylpentyltriethoxysilan, (2,3,5,6-Tetrahydro-1,4-oxazin-4-yl)methyltriethoxysilan, N,N-Di-n-butylaminomethyltriethoxysilan, N-Cyclohexylamienomethyltriethoxysilan, (2,3,5,6-Tetrahydro-1,4-oxazin-4-yl)methyltrimethoxysilan N,N-Di-n-butylaminomethyltrimethoxysilan und N-Cyclohexylamienomethyltrimethoxysilan.

Bevorzugt handelt es sich bei den erfindungsgemäß eingesetzten Silanen (B1) um Tetraethoxysilan, 2,2,4-Trimethylpentyltrimethoxysilan, (2,3,5,6-Tetrahydro-1,4-oxazin-4-yl)methyltriethoxysilan, Phenyltrimethoxysilan oder n-Hexadecyltrimethoxysilan.

Bei Komponente (B1) handelt es sich um handelsübliche Produkte bzw. können diese nach in der Siliciumchemie gängigen Methoden hergestellt werden.

Die erfindungsgemäßen Zusammensetzungen enthalten Komponente (B1) in Mengen von bevorzugt 0,5 bis 7 Gewichtsteilen, besonders bevorzugt von 1 bis 3,5 Gewichtsteilen, jeweils bezogen auf 100 Gewichtsteile Komponente (A).

Beispiele für Reste R⁷ sind die für R angegebenen Reste.

Bevorzugt handelt es sich bei den Resten R⁷ um den Methylrest oder den 2,2,4-Trimethylpentylrest.

Beispiele für Reste R⁸ sind die für R angegebenen Reste.

Bevorzugt handelt es sich bei den Resten R⁸ um den Methylrest oder Ethylrest, besonders bevorzugt um den Methylrest.

Bevorzugte Beispiele für erfindungsgemäß gegebenenfalls eingesetzte Siliciumverbindungen (B2) sind
EtO(SiMe₂O)₃SiR⁷(OEt) ₂,
(EtO(SiMe₂O)₃)₂SiR⁷(OEt),
MeO(SiMe₂O)₃SiR⁷(OMe)₂,
(MeO(SiMe₂O)₃)₂SiR⁷OMe),
EtO(SiMe₂O)₃SiR⁷ (OEt)O(SiMe₂O)₃SiR⁷ (OEt)₂,
MeO(SiMe₂O)₃SiR⁷ (OMe)O(SiMe₂O)₃SiR⁷ (OMe)₂
EtO(SiMe₂O)ₓSi(iOct)(OEt)₂,
(EtO(SiMe₂O)ₓ)₂Si(iOct)(OEt),
MeO(SiMe₂O)ₓSi(iOct)(OMe)₂,
(MeO(SiMe₂O)ₓ)₂Si(iOct)(OMe),
EtO(SiMe₂O)ₓSi(iOct)(OEt)O(SiMe₂O)₃Si(iOct)(OEt)₂,
MeO(SiMe₂O)ₓSi(iOct)(OMe)O(SiMe₂O)₃Si(iOct)(OMe)₂,
[(EtO)₃SiO_{1/2}][(EtO)₂SiO_{2/2}][(EtO)SiO_{3/2}][SiO_{4/2}] oder
[(EtO)₂SiMeO_{1/2}][(EtO)SiMeO_{2/2}][MeSiO_{3/2}],
mit Me gleich Methylrest, Et gleich Ethylrest, iOct gleich 2,2,4-Trimethylpentylrest, x=1-9 und R⁷ gleich geradkettige, verzweigte oder cyclische, aliphatische Kohlenwasserstoffreste mit 2 bis 8 Kohlen stoffatomen, wobei die Reste R⁷ innerhalb der einzelnen Verbindungen eine identische Bedeutung haben.

Besonders bevorzugt handelt es sich bei den erfindungsgemäß gegebenenfalls eingesetzten Siliciumverbindungen (B2) um MeO(SiMe₂O)ₓSi(iOct)(OMe)₂, (MeO(SiMe₂O)ₓ)₂Si(iOct)(OMe), MeO(SiMe₂O)ₓSi(iOct)(OMe)O(SiMe₂O)₃Si(iOct)(OMe)₂, [(EtO)₃SiO_{1/2}]_{0,37}[(EtO)₂SiO_{2/2}]_{0,41}[(EtO)SiO_{3/2}]_{0,20}[SiO_{4/2}]_{0,02} oder [(EtO)₂SiMeO_{2/2}]_{0,18}[(EtO)SiMeO_{2/2}]_{0,48}[MeSiO_{3/2}]_{0,34} mit Me gleich Methylrest, Et gleich Ethylrest, iOct gleich 2,2,4-Trimethylpentylrest und x = 1-9.

Die erfindungsgemäß gegebenenfalls eingesetzten Siliciumverbindungen (B2) haben eine Viskosität von bevorzugt 5 bis 15 mPas bei 25°C.

Bevorzugt haben die erfindungsgemäß gegebenenfalls eingesetzten Siliciumverbindungen (B2) ein Molekulargewicht von größer 195 g/mol.

Insbesondere haben die gegebenenfalls eingesetzten Siliciumverbindungen (B2) die mittlere Zusammensetzung [R⁷(OMe)₂O_{1/2}]ₑ[R⁷Si(OMe)O_{2/2}]_{f}[R⁷SiO_{3/2}]_{g}[Me₂SiO_{2/2}]ₕ[Me₂Si(OMe)O_{1/2}]ᵢ, wobei e= 0,05-0,15 f= 0,10-0,20, g= 0,00-0,10, h=0,40-0,65 und i= 0,10-0,30 ist mit e+f+g < h+i und e+f+g+h+i=1 mit Me gleich Methylrest und R⁷ gleich der oben genannten Bedeutung.

Die gegebenenfalls eingesetzten Siliciumverbindungen (B2) können nach in der Siliciumchemie gängigen Methoden hergestellt werden, wie z.B. durch Äquilibrierung von Polydimethylsiloxanen mit Trialkoxysilanen unter basischer Katalyse.

Falls die erfindungsgemäßen Zusammensetzungen Komponente (B2) enthalten, handelt es sich um Mengen von bevorzugt 1 bis 20 Gewichtsteilen, besonders bevorzugt von 1 bis 10 Gewichtsteilen, insbesondere von 2 bis 6 Gewichtsteilen, jeweils bezogen auf 100 Gewichtsteile Komponente (A).

Zusätzlich zu den Komponenten (A), (B1) und gegebenenfalls (B2) können die erfindungsgemäßen Massen nun alle Stoffe enthalten, die auch bisher in durch Kondensationsreaktion vernetzbaren Massen eingesetzt worden sind, wie z.B. Haftvermittler (C), Härtungsbeschleuniger (D), Weichmacher (E), Füllstoffe (F) und Additive (G).

Als Haftvermittler (C) können alle Haftvermittler, die auch bisher in durch Kondensationsreaktion vernetzbare Massen eingesetzt werden, verwendet werden.

Bevorzugt handelt es sich bei Haftvermittler (C) um Organyloxysilane mit Glycidoxy-, Amino-, Ureido-, Acryloxy- oder Methacryloxygruppen sowie deren Teilkondensate.

Beispiele für Haftvermittler (C) sind 3-Aminopropyltrimethoxysilan, 3-Aminopropyltriethoxysilan, 3-(2-Aminoethyl)aminopropyltrimethoxysilan, 3-(2-Aminoethyl)aminopropyltriethoxysilan, 3-Glycidoxypropyltrimethoxysilan, 3-Glycidoxypropyltriethoxysilan, 3-Methacryloxypropyltrimethoxysilan, 3-Methacryloxypropyltriethoxysilan, 3-Ureidopropyltrimethoxysilan, 3-Ureidopropyltriethoxysilan, 3-Aminopropyldimethoxymethylsilan, 3-Aminopropyldiethoxymethylsilan, 3-(2-Aminoethyl)aminopropyldimethoxymethylsilan und 3-(2-Aminoethyl)aminopropyldiethoxymethylsilan.

Falls die erfindungsgemäßen Massen Haftvermittler (C) enthalten, handelt es sich um Mengen von vorzugsweise 0,5 bis 5,0 Gewichtsteilen, besonders bevorzugt 1 bis 3 Gewichtsteilen, jeweils bezogen auf 100 Gewichtsteile Bestandteil (A).

Als Härtungsbeschleuniger (D) können alle Härtungsbeschleuniger, die auch bisher in durch Kondensationsreaktion vernetzbare Massen eingesetzt werden, verwendet werden.

Beispiele für Härtungsbeschleuniger (D) sind Titanverbindungen, wie beispielsweise Tetrabutyl- oder Tetraisopropyltitanat, oder Titanchelate, wie Bis(ethylacetoacetato)diisobutoxytitanium, oder organische Zinnverbindungen, wie Di-n-butylzinndilaurat und Di-n-butylzinndiacetat, Di-n-butylzinnoxid, Dimethylzinndiacetat, Dimethylzinndilaurat, Dimethylzinndineodecanoate, Dimethylzinnoxid, Di-n-octylzinndiacetat, Di-n-octylzinndilaurat, Di-n-octylzinnoxid sowie Umsetzungsprodukte dieser Verbindungen mit Alkoxysilanen, wie das Umsetzungsprodukt von Di-n-butylzinndiacetat mit Tetraethoxysilan, wobei Di-n-octylzinndiacetat, Di-n-octylzinndilaurat, Dioctylzinnoxid, Umsetzungsprodukte des Di-n-octylzinnoxids mit Tetraethoxysilan, Tetrabutyltitanat, Tetraisopropyltitanat oder Bis(ethylacetoacetato)diisobutoxytitanium bevorzugt sind.

Falls die erfindungsgemäßen Massen Härtungsbeschleuniger (D) enthalten, handelt es sich um Mengen von vorzugsweise 0,001 bis 20 Gewichtsteilen, besonders bevorzugt 0,001 bis 1 Gewichtsteilen, jeweils bezogen auf 100 Gewichtsteile Bestandteil (A).

Beispiele für gegebenenfalls eingesetzte Weichmacher (E) sind bei Raumtemperatur flüssige, durch Trimethylsiloxygruppen endblockierte Dimethylpolysiloxane, insbesondere mit Viskositäten bei 25°C im Bereich zwischen 5 und 1000 mPas, sowie hochsiedende Kohlenwasserstoffe, wie zum Beispiel Paraffinöle oder Mineralöle bestehend aus naphthenischen und paraffinischen Einheiten.

Falls die erfindungsgemäßen Massen Komponente (E) enthalten, handelt es sich um Mengen von vorzugsweise 5 bis 30 Gewichtsteilen, bevorzugt 5 bis 25 Gewichtsteilen, jeweils bezogen auf 100 Gewichtsteile Siloxane (A). Bevorzugt enthalten die erfindungsgemäßen Zusammensetzungen keinen Weichmacher (E).

Bei den in den erfindungsgemäßen Massen gegebenenfalls eingesetzten Füllstoffen (F) kann es sich um beliebige, bisher bekannte Füllstoffe handeln.

Beispiele für gegebenenfalls eingesetzte Füllstoffe (F) sind nicht verstärkende Füllstoffe (F), also Füllstoffe mit einer BET-Oberfläche von bis zu 20 m²/g, wie Quarz, Diatomeenerde, Calciumsilikat, Zirkoniumsilikat, Zeolithe, Metalloxidpulver, wie Aluminium-, Titan-, Eisen- oder Zinkoxide bzw. deren Mischoxide, Bariumsulfat, Calciumcarbonat, Gips, Siliciumnitrid, Siliciumcarbid, Bornitrid, Glas- und Kunststoffpulver, wie Polyacrylnitrilpulver; verstärkende Füllstoffe, also Füllstoffe mit einer BET-Oberfläche von mehr als 20 m²/g, wie gefällte Kreide und Ruß, wie Furnace- und Acetylenruß; Kieselsäure, wie pyrogen hergestellte Kieselsäure und gefällte Kieselsäure; faserförmige Füllstoffe, wie Kunststofffasern.

Bevorzugt handelt es sich bei den gegebenenfalls eingesetzten Füllstoffen (F) um Calciumcarbonat oder Kieselsäure, besonders bevorzugt um Kieselsäure oder ein Gemisch aus Kieselsäure und Calciumcarbonat.

Bevorzugte Calciumcarbonat-Typen (F) sind gemahlen oder gefällt und gegebenenfalls oberflächenbehandelt mit Fettsäuren wie Stearinsäure oder deren Salze. Bei der bevorzugten Kieselsäure handelt es sich bevorzugt um pyrogene Kieselsäure.

Falls die erfindungsgemäßen Massen Füllstoffe (F) enthalten, handelt es sich um Mengen von vorzugsweise 10 bis 150 Gewichtsteilen, besonders bevorzugt 10 bis 130 Gewichtsteilen, insbesondere 10 bis 100 Gewichtsteilen, jeweils bezogen auf 100 Gewichtsteile Organopolysiloxane (A). Die erfindungsgemäßen Massen enthalten bevorzugt Füllstoff (F).

Beispiele für Additive (G) sind Pigmente, Farbstoffe, Riechstoffe, Oxidationsinhibitoren, Mittel zur Beeinflussung der elektrischen Eigenschaften, wie leitfähiger Ruß, flammabweisend machende Mittel, Lichtschutzmittel, Biozide wie Fungizide, Bactericide und Acarizide, zellenerzeugende Mittel, z.B. Azodicarbonamid, Hitzestabilisatoren, Scavenger, wie Si-N enthaltende Silazane oder Silylamide, z.B. N,N'-Bis-trimethylsilyl-harnstoff oder Hexamethyldisilazan, Cokatalysatoren, wie Lewis- und Brönstedsäuren, z.B. Sulfonsäuren, Phosphorsäuren, Phosphorsäureester, Phosphonsäuren und Phosphonsäureester, Thixotropiermittel, wie beispielsweise einseitig oder beidseitig OH-endterminiertes Polyethylenglykol oder gehärtetes Rizinusöl, Mittel zur weiteren Regulierung des Moduls wie Polydimethylsiloxane mit einer OH-Endgruppe, sowie beliebige Siloxane, die unterschiedlich zu Komponenten (A), (B) und (C) sind.

Falls die erfindungsgemäßen Massen Additive (G) enthalten, handelt es sich um Mengen von vorzugsweise 0,1 bis 20 Gewichtsteilen, besonders bevorzugt 0,1 bis 15 Gewichtsteilen, insbesondere 0,1 bis 10 Gewichtsteilen, jeweils bezogen auf 100 Gewichtsteile Organopolysiloxane (A). Bevorzugt enthalten die erfindungsgemäßen Massen Komponente (G).

Bei den einzelnen Bestandteilen der erfindungsgemäßen Massen kann es sich jeweils um eine Art eines solchen Bestandteils wie auch um ein Gemisch aus mindestens zwei verschiedenen Arten derartiger Bestandteile handeln.

Bevorzugt werden zur Herstellung der erfindungsgemäßen Massen keine über die Komponenten (A) bis (G) hinausgehende Bestandteile eingesetzt.

Bevorzugt handelt es sich bei den erfindungsgemäßen Massen um solche herstellbar unter Verwendung von
(A) Organopolysiloxanen der Formel (I),
(B1) Silanen der Formel (II),
(B2) Siliciumverbindungen bestehend aus Einheiten der Formel (III),
   gegebenenfalls (C) Haftvermittlern,
   gegebenenfalls (D) Härtungsbeschleunigern,
   gegebenenfalls (E) Weichmachern,
   gegebenenfalls (F) Füllstoffe und
   gegebenenfalls (G) Additiven.

Besonders bevorzugt handelt es sich bei den erfindungsgemäßen Massen um solche herstellbar unter Verwendung von
(A) Organopolysiloxanen der Formel (I),
(B1) Silanen der Formel (II),
(B2) Siliciumverbindungen bestehend aus Einheiten der Formel (III),
(C) Haftvermittlern,
   gegebenenfalls (D) Härtungsbeschleunigern,
   gegebenenfalls (E) Weichmachern,
   gegebenenfalls (F) Füllstoffen und
   gegebenenfalls (G) Additiven.

Insbesondere handelt es sich bei den erfindungsgemäßen Massen um solche herstellbar unter Verwendung von
(A) Organopolysiloxanen der Formel (I),
(B1) Silanen der Formel (II),
(B2) Siliciumverbindungen bestehend aus Einheiten der Formel (III),
(C) Haftvermittlern,
(D) Härtungsbeschleunigern,
   gegebenenfalls (E) Weichmachern,
(F) Füllstoffen und
   gegebenenfalls (G) Additiven.

In einer weiteren bevorzugten Ausführungsform handelt es sich bei den erfindungsgemäßen Massen um solche herstellbar unter Verwendung von
(A) Organopolysiloxanen der Formel (I),
(B1) Silanen der Formel (II),
(B2) Siliciumverbindungen bestehend aus Einheiten der Formel (III),
(C) Haftvermittlern,
(D) Härtungsbeschleunigern,
(F) Füllstoffen und

gegebenenfalls (G) Additiven,
mit der Maßgabe, dass sie frei von (E) Weichmachern sind.

In einer weiteren bevorzugten Ausführungsform handelt es sich bei den erfindungsgemäßen Massen um solche herstellbar unter Verwendung von
(A) Organopolysiloxanen der Formel (I),
(B1) Silanen der Formel (II),
(B2) Siloxanen bestehend aus Einheiten der Formel (III),
(C) Haftvermittlern,
(D) Härtungsbeschleunigern,
(F) Füllstoffen und
(G) Additiven,
mit der Maßgabe, dass sie frei von (E) Weichmachern sind.

Zur Bereitung der erfindungsgemäßen Massen können alle Bestandteile in beliebiger Reihenfolge miteinander vermischt werden. Dieses Vermischen kann bei Raumtemperatur und dem Druck der umgebenden Atmosphäre, also etwa 900 bis 1100 hPa, erfolgen. Falls erwünscht, kann dieses Vermischen aber auch bei höheren Temperaturen erfolgen, z.B. bei Temperaturen im Bereich von 35 bis 135°C. Weiterhin ist es möglich, zeitweilig oder ständig unter vermindertem Druck zu mischen, wie z.B. bei 30 bis 500 hPa Absolutdruck, um flüchtige Verbindungen oder Luft zu entfernen.

Das erfindungsgemäße Vermischen findet bevorzugt unter weitestgehendem Ausschluss von Wasser statt, d.h. mit Einsatz von Rohstoffen, welche einen Wassergehalt von vorzugsweise weniger als 10000 mg/kg, bevorzugt von weniger als 5000 mg/kg, insbesondere von weniger als 1000 mg/kg, aufweisen. Während des Mischprozesses wird bevorzugt mit trockener Luft oder Schutzgas wie Stickstoff beschleiert, wobei das jeweilige Gas einen Feuchtegehalt von vorzugsweise weniger als 10000 pg/kg, bevorzugt von weniger als 1000 ug/kg, insbesondere von weniger als 500 ug/kg, aufweist. Die Massen werden nach dem Herstellen bevorzugt in handelsübliche feuchtigkeitsdichte Gebinde gefüllt, wie z.B. Kartuschen, Schlauchbeutel, Eimer und Fässer.

In einer bevorzugten Verfahrensweise werden zunächst die Komponenten (A), (B), gegebenenfalls (C) und (E) miteinander vermischt, danach gegebenenfalls Füllstoffe (F) zugegeben und schließlich gegebenenfalls weitere Bestandteile (D) und (G) zugegeben, wobei die Temperatur beim Mischen vorzugsweise 60°C nicht übersteigt.

Ein weiterer Gegenstand der Erfindung ist ein Verfahren zur Herstellung der erfindungsgemäßen Masse durch Vermischen der einzelnen Bestandteile.

Das erfindungsgemäße Verfahren kann kontinuierlich, diskontinuierlich oder semikontinuierlich nach bekannten Verfahren und unter Verwendung von bekannten Apparaturen erfolgen.

Die erfindungsgemäßen bzw. erfindungsgemäß hergestellten Massen sind unter Ausschluss von Feuchtigkeit lagerfähig und bei Zutritt von Feuchtigkeit vernetzbar.

Für die Vernetzung der erfindungsgemäßen Zusammensetzungen reicht der übliche Wassergehalt der Luft aus. Die Vernetzung der erfindungsgemäßen Massen erfolgt vorzugsweise bei Raumtemperatur. Sie kann, falls erwünscht, auch bei höheren oder niedrigeren Temperaturen als Raumtemperatur, z.B. bei -5° bis 15°C oder bei 30°C bis 50°C und/oder mittels den normalen Wassergehalt der Luft übersteigenden Konzentrationen von Wasser durchgeführt werden.

Vorzugsweise wird die Vernetzung bei einem Druck von 100 bis 1100 hPa, insbesondere beim Druck der umgebenden Atmosphäre, also etwa 900 bis 1100 hPa, durchgeführt.

Ein weiterer Gegenstand der vorliegenden Erfindung sind Formkörper, hergestellt durch Vernetzung der erfindungsgemäßen Masse.

Die erfindungsgemäßen Formkörper haben eine Spannung bei 100% Dehnung von bevorzugt kleiner 0,4 MPa, gemessen an Prüfkörpern Typ 2 gemäß ISO 37.

Die erfindungsgemäßen Massen können für alle Verwendungszwecke eingesetzt werden, für die unter Ausschluss von Wasser lagerfähige, bei Zutritt von Wasser bei Raumtemperatur zu Elastomeren vernetzende Massen eingesetzt werden können.

Überraschenderweise wurde gefunden, dass unter ausschließlicher Verwendung von Silanen mit Molekulargewichten von über 195 g/mol Dichtmassen mit guter Reaktivität und hoher Lagerstabilität hergestellt werden können.

Weiterhin konnte überraschend gezeigt werden, dass vernetzbare Massen auf Basis von ausschließlich Silanen mit hohen Molekulargewichten auch dann nicht zu Randzonenverschmutzung bei Natursteinverfugungen führen, wenn sie gleichzeitig keine nicht reaktiven Weichmacher enthalten. Es war nicht zu erwarten, dass durch eine relativ geringe Erhöhung der Molekulargewichte solche unerwünschten Effekte vollständig vermieden werden können. Der Fachmann würde im Gegenteil erwarten, dass Alkoxysilane mit hohen Molekulargewichten wegen der geringeren Reaktivität mehr Zeit zur Verfügung steht, um während der Aushärtung der RTV1-Dichtmasse aus der Dichtmasse heraus diffundieren zu können. Damit würde der Effekt der Randzonenverschmutzung durch Hydrophobierung der Natursteinoberfläche eher verstärkt werden, insbesondere auch deswegen, weil längere Alkylreste den Hydrophobierungs-Effekt zusätzlich steigern.

Die erfindungsgemäßen Massen eignen sich somit ausgezeichnet beispielsweise als Abdichtmassen für Fugen, einschließlich senkrecht verlaufender Fugen, und ähnlichen Leerräumen von z.B. 10 bis 40 mm lichter Weite, z.B. von Gebäuden, Land-, Wasser- und Luftfahrzeugen, oder als Klebstoffe oder Verkittungsmassen, z.B. im Fensterbau oder bei der Herstellung von Vitrinen, sowie beispielsweise zur Herstellung von Schutzüberzügen, einschließlich solcher für der ständigen Einwirkung von Süß- oder Meerwasser ausgesetzte Oberflächen oder das Gleiten verhindernde Überzüge oder von gummielastischen Formkörpern.

Die erfindungsgemäßen Massen haben den Vorteil, dass sie leicht herzustellen sind und sich durch eine sehr hohe Lagerstabilität auszeichnen.

Des Weiteren haben die erfindungsgemäßen Massen den Vorteil, dass sie eine sehr gute Handhabbarkeit bei der Anwendung zeigen und bei einer Vielzahl von Applikationen ausgezeichnete Verarbeitungseigenschaften aufweisen.

Die erfindungsgemäßen vernetzbaren Zusammensetzungen haben den Vorteil, dass der Modul gezielt eingestellt werden kann.

Die erfindungsgemäßen vernetzbaren Massen haben den Vorteil, dass sie auf einer Vielzahl von Untergründen sehr gut haften.

Die erfindungsgemäßen vernetzbaren Massen haben den Vorteil, dass sie keine Randzonen-Verschmutzung der angrenzenden Substrate verursachen. Insbesondere sind sie hervorragend geeignet um Natur- und Kunststeine verfugen zu können, ohne dass die Randzonen verunreinigt werden.

Die erfindungsgemäßen vernetzbaren Massen haben den Vorteil, dass sie hinsichtlich der eingesetzten Stoffe sehr wirtschaftlich sind.

In den nachstehend beschriebenen Beispielen beziehen sich alle Viskositätsangaben auf eine Temperatur von 25°C. Sofern nicht anders angegeben, werden die nachstehenden Beispiele bei einem Druck der umgebenden Atmosphäre, also etwa bei 1000 hPa, und bei Raumtemperatur, also bei etwa 23°C, bzw. bei einer Temperatur, die sich beim Zusammengeben der Reaktanden bei Raumtemperatur ohne zusätzliche Heizung oder Kühlung einstellt, sowie bei einer relativen Luftfeuchtigkeit von etwa 50 % durchgeführt. Des weiteren beziehen sich alle Angaben von Teilen und Prozentsätzen, soweit nichts anderes angegeben ist, auf das Gewicht.

Die Zugfestigkeit, Reißdehnung und die Spannung bei 100 % Dehnung werden nach ISO 37 an Prüfkörpern des Typs 2 bestimmt.

Im Rahmen der vorliegenden Erfindung wird die dynamische Viskosität der Organosiliciumverbindungen nach DIN 53019 gemessen. Dabei wurde bevorzugt wie folgt vorgegangen: Die Viskosität wird, sofern nicht anders angegeben, bei 25°C mittels eines Rotationsrheometers "Physica MCR 300" von der Firma Anton Paar gemessen. Dabei wird für Viskositäten von 1 bis 200 mPa·s ein koaxiales Zylinder-Messsystem (CC 27) mit einem Ring-Messspalt von 1,13 mm genutzt und für Viskositäten von größer als 200 mPa·s ein Kegel-Platte-Messsystem (Searle-System mit Messkegel CP 50-1) verwendet. Die Schergeschwindigkeit wird der Polymerviskosität angepasst (1 bis 99 mPa·s bei 100 s⁻¹; 100 bis 999 mPa·s bei 200 s⁻¹; 1000 bis 2999 mPa·s bei 120 s⁻¹; 3000 bis 4999 mPa·s bei 80 s⁻¹; 5000 bis 9999 mPa·s bei 62 s⁻¹; 10000 bis 12499 mPa·s bei 50 s⁻¹; 12500 bis 15999 mPa·s bei 38,5 s⁻¹; 16000 bis 19999 mPa·s bei 33 s⁻¹; 20000 bis 24999 mPa·s bei 25 s⁻¹; 25000 bis 29999 mPa·s bei 20 s⁻¹; 30000 bis 39999 mPa·s bei 17 s⁻¹; 40000 bis 59999 mPa·s bei 10 s⁻¹; 60000 bis 149999 bei 5 s⁻¹; 150000 bis 199999 mPa·s bei 3,3 s⁻¹; 200000 bis 299999 mPa·s bei 2,5 s⁻¹; 300000 bis 1000000 mPa·s bei 1,5 s⁻¹.

Im Rahmen der vorliegenden Erfindung werden die zahlenmittlere und gewichtsmittlere Molekulargewichte Mn und Mw wie folgt bestimmt:
Methode: Size Exclusion Chromatography (SEC) nach DIN 55672-1 Durchflussgeschwindigkeit: 1,00 mL/min
Injektionssystem: Autosampler Agilent 1200 (Agilent Technologies)
Injektionsvolumen: 100 µL
Eluent: Im Falle von phenylgruppenhaltigen Produkten wurde Tetrahydrofuran >99,5%, stabilisiert mit 250 ppm 2,6-Di-tert-butyl-4-methylphenol (BHT) verwendet; im Falle von nicht phenylgruppenhaltigen Materialien wurde Toluol >99,9%, p.A., eingesetzt. Alle Chemikalien sind käuflich erhältlich z.B. bei der Firma Merck KGaA, D-Darmstadt.
Säule: Stationäre Phase: Polystyrol-divinylbenzol von der Firma Agilent Technologies.
Es wurden vier Säulen hintereinandergeschaltet, bestehend aus einer 50 mm langen Vorsäule und drei je 300 mm langen Trennsäulen. Alle Säulen hatten einen Innendurchmesser von
7,8 mm. Die verwendeten Gele hatten eine Partikelgröße von 5 um. Die Porengröße der Vorsäule betrug 500 Ä, die der drei Trennsäulen betrug der Reihenfolge nach 10000 Ä, 500 Ä und 100 Å.
Säulentemperatur: Ofentemperatur 45°C. Die Konzentration wurde mit einem RI-Detektor ermittelt (Messprinzip Deflexion, Typ: Agilent 1200; Zellvolumen: 8 µL; Temperatur: 45°C
Das System wurde mit ebenfalls von der Fa. Agilent käuflich erhältlichen Polystyrolstandards kalibriert. Konzentration:
   0,4 g/L (EasiCal, fertige Polystyrol-Kalibriermittel;
Injektionsvolumen: 100 uL. Als interner Standard für Toluol als Eluent wurde Tetrahydrofuran als Markersubstanz verwendet und als interner Standard für Tetrahydrofuran als Eluent wurde Toluol als Markersubstanz verwendet. Anpassen von Kalibrierkurven: Polynomeller Fit PSS 3. Ordnung.

Probenvorbereitung: Etwa 15-50 mg der zu messenden Probe wurden im jeweiligen Eluent gelöst (c = etwa 3-10 mg/mL). Die Probenmenge wurde so bemessen, dass ein deutliches RI-Signal erhalten werden konnte. Alle Proben ließen sich vollständig im Eluenten lösen.

Auswertung: Die ermittelten Molgewichte wurden jeweils auf ganze Hunderter gerundet.

Die Randzonenverschmutzung von porösen Substraten wurde nach ASTM (American Society for Testing and Materials) C 1248 gemessen. Die Prüfkörper aus Dichtmasse und Sandstein wurden nach 21-tägiger Vulkanisation bei 23°C und 50 % relativer Luftfeuchtigkeit um 25 % gestaucht, dann insgesamt 28 Tage bei
1) 23 °C und 50 % relativer Luftfeuchtigkeit,
2) 70 °C im Wärmeschrank und
3) in einer, wie in der ASTM C 1248 beschriebenen, UV-Prüfkammer gelagert.

Im Anschluss daran erfolgt eine visuelle Beurteilung der Randzonenverschmutzung. Wenn keine Randzonenverschmutzung zu sehen ist, dann ist das Ergebnis 0 mm. Falls eine Randzonenverschmutzung festzustellen ist, dann wird die maximale Breite der Zone, die die größte Verschmutzung aufweist, in mm, gerundet auf eine ganze Zahl, angegeben.

In den nachfolgenden Beispielen wurden alle Mischungen in einem Planetenmischer vom Typ Labmax hergestellt.

### Beispiel 1

### Herstellung von Siloxan A1

Eine Mischung aus 660 g eines α,ω-Dihydroxypolydimethylsiloxans mit einer Viskosität von 80 000 mPas und 220 g eines α,ω-Dihydroxypolydimethylsiloxans mit einer Viskosität von 20 000 mPas wurden mit 30,44 g einer Lösung von 0,04 g 1,5,7-Triazabicyclo[4.4.0]dec-5-en in 30,4 g (2,3,5,6-Tetrahydro-1,4-oxazin-4-yl)methyltriethoxysilan für 5 Minuten bei 200 Umdrehungen/min gerührt. Nach 5 Minuten Reaktionszeit erhält man ein Gemisch aus 98,0 Gew.-% α,ω-Bis((2,3,5,6-Tetrahydro-1,4-oxazin-4-yl)methyldiethoxysilyl)polydimethylsiloxan, 1,9 Gew.-% (2,3,5,6-Tetrahydro-1,4-oxazin-4-yl)methyltriethoxysilan und 0,1 Gew.-% Ethanol mit einer Viskosität von 52 000 mPas.

### Herstellung der Mischung M1

455 g des bei der Herstellung des Siloxans A1 erhaltenen Reaktionsgemischs wurden mit 10,6 g Tetraethoxysilanhydrolysat-Oligomer mit einem Gehalt an SiO₂ von 40% bei Totalhydrolyse und Kondensation, erhältlich bei der Wacker Chemie AG, D-München unter der Bezeichnung "SILIKAT TES 40", 12,6 g eines Äquilibrierungsproduktes aus 6,3 g Methyltriethoxysilan-Hydrolysat-Oligomeren mit durchschnittlich 10 Si-Atomen pro Molekül und 6,3 g 3-Aminopropyltriethoxysilan zugegeben und für weitere 5 Minuten bei 200 Umdrehungen/min gerührt. Danach wurden 44 g einer hydrophilen pyrogenen Kieselsäure mit einer Oberfläche von 150 m²/g, erhältlich bei der Wacker Chemie AG unter der Bezeichnung HDK^{®} V15A, zugegeben und zunächst bei 200 Umdrehungen/min für weitere 5 Minuten gerührt, bis die gesamte pyrogene Kieselsäure benetzt war. Danach wurden 10 Minuten bei 600 Umdrehungen/min gerührt bei vermindertem Druck von 200 mbar. Zum Schluss wurden 1,58 g einer Lösung von 0,27 g Dioctyl-zinnoxid in 1,31 g eines Äquilibrierungsproduktes aus 0,655 g Methyltriethoxysilan-Hydrolysat-Oligomeren mit durchschnittlich 10 Si-Atomen pro Molekül und 0,655 g 3-Aminopropyltriethoxysilan und 3 g einer 33 Gew.-%igen Lösung von Octylphosphonsäure in Phenyltrimethoxysilan zugegeben und weitere 5 min unter vermindertem Druck (200 mbar) gerührt.

Anschließend wird die Mischung in handelsübliche Kartuschen abgefüllt und unter Ausschluss von Feuchtigkeit gelagert. 24h nach der Herstellung der Mischungen wurden aus diesen Mischungen 2 mm dicke Platten ausgezogen und daraus nach 7 Tagen Aushärtung bei 23°C und 50% relativer Luftfeuchte hantelförmige Prüfkörper des Typs 2 gemäß ISO 37, 6. Ausgabe 2017-11, hergestellt.

Die Ergebnisse finden sich in Tabelle 1.

### Beispiel 2

### Herstellung eines Oligomerengemischs B2-2

240 g (3,25 mol) eines α,ω-Bis(trimethylsiloxy)polydimethylsiloxans mit einer Viskosität von 1000 mPas, 234 g (1,0 mol) Trimethoxy(2,4,4-trimethylpentyl)silan (= iOctSi(OMe)₃), erhältlich bei der Wacker Chemie AG unter der Bezeichnung SILRES^{®} BS 1316, und 0,80 g einer Lösung von Natriumethylat (21%ig) in Ethanol werden vermischt und 4 Stunden auf 110°C erhitzt. Nach dem Abkühlen der Lösung wird die Mischung durch Zugabe von 1,60 g einer Lösung von Dimethyldichlorsilan (10%ig) in n-Heptan neutralisiert. Diese Mischung wurde bei reduziertem Druck von 50 mbar bei 120°C an einem Rotationsverdampfer entflüchtigt. Die Zusammensetzung des Gemisches wurde mittels 29-Si-NMR Spektroskopie ermittelt. Das Gemisch enthielt 1,4 Gew.-% iOctSi(OMe)₃, 0,4 Gew.-% Me₂Si(OMe)₂ und 98,2 Gew.-% eines Oligomerengemisches der mittleren Zusammensetzung von [iOctSi(OMe)₂O_{1/2}]_{0,08}[iOctSi(OMe)O_{2/2}]_{0,15}[iOctSiO_{3/2}]_{0,05} [Me₂SiO_{2/2}]_{0,43}[Me₂Si(OMe)O_{1/2}]_{0,29}. Die mittels Gelpermeationschromatographie bestimmten Molekulargewichte betrugen 929 g/mol (Mw) und 635 (Mn). Die Polydispersität (Mw/Mn) war 1,46.

### Herstellung der Mischung M2

Die in Beispiel 1 beschriebene Herstellung der Mischung M1 wurde wiederholt. Zusätzlich wurden 36 g des oben beschriebenen Oligomerengemischs B2-2 zugemischt.

Anschließend wird die Mischung M2 in handelsübliche Kartuschen abgefüllt und unter Ausschluss von Feuchtigkeit gelagert. 24h nach der Herstellung der Mischungen wurden aus diesen Mischungen 2 mm dicke Platten ausgezogen und daraus nach 7 Tagen Aushärtung bei 23°C und 50% relativer Luftfeuchte hantelförmige Prüfkörper des Typs 2 gemäß ISO 37, 6. Ausgabe 2017-11, hergestellt.

Die Ergebnisse finden sich in Tabelle 1.

### Beispiel 3

### Herstellung von Siloxan A3

Eine Mischung aus 660 g eines α,ω-Dihydroxypolydimethylsiloxans mit einer Viskosität von 80 000 mPas und 220 g eines α,ω-Dihydroxypolydimethylsiloxans mit einer Viskosität von 20 000 mPas wurden mit 30,44 g einer Lösung von 0,04 g 1,5,7-Triazabicyclo[4.4.0]dec-5-en in 30,4 g Phenyltrimethoxysilan für 30 Minuten bei 200 Umdrehungen/min gerührt. Nach 30 Minuten Reaktionszeit erhält man ein Gemisch aus 98,0 Gew.-% α,ω-Bis-(phenyldimethoxysilyl)polydimethylsiloxan, 1,9 Gew.-% Phenyltrimethoxysilan und 0,1 Gew.-% Methanol mit einer Viskosität von 51 000 mPas.

### Herstellung der Mischung M3

Die in Beispiel 1 beschriebene Verfahrensweise zur Herstellung der Mischung M1 wurde wiederholt mit der Abänderung, dass anstelle des Siloxans A1 Siloxan A3 verwendet wurde.

Anschließend wird die Mischung M3 in handelsübliche Kartuschen abgefüllt und unter Ausschluss von Feuchtigkeit gelagert. 24h nach der Herstellung der Mischungen wurden aus diesen Mischungen 2 mm dicke Platten ausgezogen und daraus nach 7 Tagen Aushärtung bei 23°C und 50% relativer Luftfeuchte hantelförmige Prüfkörper des Typs 2 gemäß ISO 37, 6. Ausgabe 2017-11, hergestellt.

Die Ergebnisse finden sich in Tabelle 1.

### Beispiel 4

### Herstellung der Mischung M4

Die in Beispiel 1 beschriebene Verfahrensweise zur Herstellung der Mischung M1 wurde wiederholt mit der Abänderung, dass anstelle des Siloxans A1 Siloxan A3 verwendet wurde. Zusätzlich wurden 36 g des oben beschriebenen Oligomerengemischs B2-2 zugemischt.

Anschließend wird die Mischung M4 in handelsübliche Kartuschen abgefüllt und unter Ausschluss von Feuchtigkeit gelagert. 24h nach der Herstellung der Mischungen wurden aus diesen Mischungen 2 mm dicke Platten ausgezogen und daraus nach 7 Tagen Aushärtung bei 23°C und 50% relativer Luftfeuchte hantelförmige Prüfkörper des Typs 2 gemäß ISO 37, 6. Ausgabe 2017-11, hergestellt.

Die Ergebnisse finden sich in Tabelle 1.

### Beispiel 5

### Herstellung von Siloxan A5

Eine Mischung aus 660 g eines α,ω-Dihydroxypolydimethylsiloxans mit einer Viskosität von 80 000 mPas und 220 g eines α,ω-Dihydroxypolydimethylsiloxans mit einer Viskosität von 20 000 mPas wurden mit 53,2 g einer Lösung von 0,1 g 1,5,7-Triazabicyclo[4.4.0]dec-5-en in 53,1 g n-Hexadecyltrimethoxysilan für 60 Minuten bei 200 Umdrehungen/min gerührt. Nach 60 Minuten Reaktionszeit erhält man ein Gemisch aus 95,3 Gew.-% α,ω-Bis-(n-hexadecyldimethoxysilyl)polydimethylsiloxan, 4,6 Gew.-% Phenyltrimethoxysilan und 0,1 Gew.-% Methanol mit einer Viskosität von 50 200 mPas.

### Herstellung der Mischung M5

Die in Beispiel 1 beschriebene Verfahrensweise zur Herstellung der Mischung M1 wurde wiederholt mit der Abänderung, dass anstelle des Siloxans A1 Siloxan A5 verwendet wurde. Zusätzlich wurden 36 g des oben beschriebenen Oligomerengemischs B2-2 zugemischt.

Anschließend wird die Mischung M5 in handelsübliche Kartuschen abgefüllt und unter Ausschluss von Feuchtigkeit gelagert. 24h nach der Herstellung der Mischungen wurden aus diesen Mischungen 2 mm dicke Platten ausgezogen und daraus nach 7 Tagen Aushärtung bei 23°C und 50% relativer Luftfeuchte hantelförmige Prüfkörper des Typs 2 gemäß ISO 37, 6. Ausgabe 2017-11, hergestellt.

Die Ergebnisse finden sich in Tabelle 1.

### Beispiel 6

### Herstellung von Siloxan A6

Eine Mischung aus 660 g eines α,ω-Dihydroxypolydimethylsiloxans mit einer Viskosität von 80000 mPas und 280 g eines α,ω-Trimethylsiloxypolydimethylsiloxans mit einer Viskosität von 10 mPas wurden mit 38,24 g einer Lösung von 0,04 g 1,5,7-Triazabicyclo[4.4.0]dec-5-en in 38,2 g Phenyltrimethoxysilan für 30 Minuten bei 200 Umdrehungen/min gerührt. Nach 30 Minuten Reaktionszeit erhält man ein Gemisch aus 98,0 Gew.-% α,ω-Bis-(phenyldimethoxysilyl)polydimethylsiloxan, 1,9 Gew.-% Phenyltrimethoxysilan und 0,1 Gew.-% Methanol mit einer Viskosität von 50800 mPas.

### Herstellung der Mischung M6

455 g des bei der Herstellung des Siloxans A6 erhaltenen Reaktionsgemischs wurden mit 11,1 g eines Äquilibrierungsproduktes aus 5,55 g Methyltriethoxysilan-Hydrolysat-Oligomeren mit durchschnittlich 10 Si-Atomen pro Molekül und 5,55 g 3-Aminopropyltriethoxysilan zugegeben und für weitere 5 Minuten bei 200 Umdrehungen/min gerührt. Danach wurden 42,2 g einer hydrophilen pyrogenen Kieselsäure mit einer Oberfläche von 150 m²/g, erhältlich bei der Wacker Chemie AG unter der Bezeichnung HDK^{®} V15A, zugegeben und zunächst bei 200 Umdrehungen/min für weitere 5 Minuten gerührt, bis die gesamte pyrogene Kieselsäure benetzt war. Danach wurden 10 Minuten bei 600 Umdrehungen/min gerührt bei vermindertem Druck von 200 mbar. Zum Schluss wurden 1,78 g einer Lösung von 0,30 g Dioctyl-zinnoxid in 1,48 g eines Äquilibrierungsproduktes aus 0,74 g Methyltriethoxysilan-Hydrolysat-Oligomeren mit durchschnittlich 10 Si-Atomen pro Molekül und 0,74 g 3-Aminopropyltriethoxysilan und 2,2 g einer 33 Gew.-%igen Lösung von Octylphosphonsäure in Phenyltrimethoxysilan zugegeben und weitere 5 Minuten unter vermindertem Druck (200 mbar) gerührt.

Anschließend wird die Mischung M6 in handelsübliche Kartuschen abgefüllt und unter Ausschluss von Feuchtigkeit gelagert. 24h nach der Herstellung der Mischungen wurden aus diesen Mischungen 2 mm dicke Platten ausgezogen und daraus nach 7 Tagen Aushärtung bei 23°C und 50% relativer Luftfeuchte hantelförmige Prüfkörper des Typs 2 gemäß ISO 37, 6. Ausgabe 2017-11, hergestellt.

Die Ergebnisse finden sich in Tabelle 1.

**Tabelle 1:**

| Beispiel | Zugfestigkeit [MPa] | Reißdehnung [%] | Spannung bei 100% Dehnung [MPa] | Randzonenverschmutzung [mm] |
|---|---|---|---|---|
| 1 | 2,1 | 260 | 0,73 | 0 |
| 2 | 2,0 | 390 | 0,55 | 0 |
| 3 | 1,9 | 310 | 0, 68 | 0 |
| 4 | 1,7 | 440 | 0,38 | 0 |
| 5 | 1,5 | 680 | 0,39 | 0 |
| 6 | 1,3 | 455 | 0,38 | 0 |

Bei keinem der Beispiele wurde eine Verschmutzung der Randzone festgestellt.

Nach der Benetzung der Prüfkörper mit Wasser wurden keine hydrophobierten Bereiche beim Sandstein gefunden.

## Patentansprüche

1. Durch Kondensationsreaktion vernetzbare Massen, herstellbar unter Verwendung von
(A) Organopolysiloxanen der Formel
(R²O)₃₋ₐSiR¹ₐO(SiR₂O)ₙSiR¹ₐ(OR²)₃₋ₐ (I),
wobei
R gleich oder verschieden sein kann und einwertige, gegebenenfalls substituierte Kohlenwasserstoffreste bedeutet, R¹ gleich oder verschieden sein kann und einwertige, gegebenenfalls substituierte Kohlenwasserstoffreste bedeutet, R² gleich oder verschieden sein kann und einwertige, gegebenenfalls substituierte Kohlenwasserstoffreste bedeutet, a gleich oder verschieden sein kann und 0 oder 1 ist und
n eine ganze Zahl von 380 bis 2000 ist, mit der Maßgabe, dass die Viskosität bei 25°C bestimmt nach der in der Beschreibung angegebenen Methode größer oder gleich 6000 mPas ist und es sich bei R¹ um Phenylrest, Rest - CH₂-NR^{6'}R^{5'} oder den Rest CH₂NR^{11'} handelt, wobei R^{5'} Kohlenwasserstoffreste mit 1 bis 12 Kohlenstoffatomen bedeutet, R^{6'} Wasserstoffatom oder Rest R^{5'} bedeutet und R^{11'} zweiwertige Kohlenwasserstoffreste, die mit Heteroatomen unterbrochen sein können, bedeutet,
(B1) Silanen der Formel
R³_{4-b}(R⁴O)_{b}Si (II),
worin
R³ gleich oder verschieden sein kann und einen einwertigen, SiC-gebundenen, gegebenenfalls substituierten Kohlenwasserstoffrest bedeutet,
R⁴ gleich oder verschieden sein kann und einen einwertigen, gegebenenfalls substituierten Kohlenwasserstoffrest bedeutet und
b 2, 3 oder 4 ist,
mit der Maßgabe, dass das Molekulargewicht der Silane der Formel (II) größer 195 g/mol ist,
und gegebenenfalls
(B2) Siliciumverbindungen bestehend aus Einheiten der Formel
R⁷_{c}(R⁸O)_{d}SiO_{(4-c-d)/2} (III),
worin
R⁷ gleich oder verschieden sein kann und einen einwertigen, SiC-gebundenen, gegebenenfalls substituierten Kohlenwasserstoffrest bedeutet,
R⁸ gleich oder verschieden sein kann und einen einwertigen, gegebenenfalls substituierten Kohlenwasserstoffrest bedeutet,
c 0, 1 oder 2 ist und
d 0, 1, 2 oder 3 ist,
mit der Maßgabe, dass in Formel (III) die Summe c+d≤3 ist, in den Siliciumverbindungen mindestens 2 Gruppen (R⁸O) anwesend sind und die Viskosität bei 25°C kleiner 2000 mPas ist,
mit der Maßgabe, dass die Massen Organosiliciumverbindungen mit einem Molekulargewicht von kleiner oder gleich 195 g/mol maximal in Mengen kleiner 0,5 Gew.-%, bezogen auf Organopolysiloxan (A), enthalten.

2. Massen gemäß Anspruch 1, **dadurch gekennzeichnet, dass** es sich bei den Resten R³ um lineare, verzweigte oder cyclische Kohlenwasserstoffreste mit 1 bis 16 Kohlenstoffatomen oder um einwertige, am Kohlenstoffatom, das an das Siliciumatom gebunden ist, mit Aminogruppen substituierte Kohlenwasserstoffreste mit 1 bis 12 Kohlenstoffatomen handelt.

3. Massen gemäß Anspruch 1 oder 2, **dadurch gekennzeichnet, dass** es sich bei Komponente (B1) um Tetraethoxysilan, 2,2,4-Trimethylpentyltrimethoxysilan, (2,3,5,6-Tetrahydro-1,4-oxazin-4-yl)methyltriethoxysilan, Phenyltrimethoxysilan oder n-Hexadecyltrimethoxysilan handelt.

4. Massen gemäß einem oder mehreren der Ansprüche 1 bis 3, **dadurch gekennzeichnet, dass** sie Komponente (B1) in Mengen von 0,5 bis 7 Gewichtsteilen, bezogen auf 100 Gewichtsteile Komponente (A), enthalten.

5. Massen gemäß einem oder mehreren der Ansprüche 1 bis 4, **dadurch gekennzeichnet, dass** sie Organosiliciumverbindungen mit einem Molekulargewicht von kleiner oder gleich 195 g/mol maximal in Mengen kleiner 0,1 Gew.-%, bezogen auf Organopolysiloxan (A), enthalten.

6. Massen gemäß einem oder mehreren der Ansprüche 1 bis 5, **dadurch gekennzeichnet, dass** es sich um solche herstellbar unter Verwendung von
(A) Organopolysiloxanen der Formel (I),
(B1) Silanen der Formel (II),
(B2) Siliciumverbindungen bestehend aus Einheiten der Formel (III),
gegebenenfalls (C) Haftvermittlern,
gegebenenfalls (D) Härtungsbeschleunigern,
gegebenenfalls (E) Weichmachern,
gegebenenfalls (F) Füllstoffe und
gegebenenfalls (G) Additiven
handelt.

7. Massen gemäß einem oder mehreren der Ansprüche 1 bis 6, **dadurch gekennzeichnet, dass** sie keine Weichmacher (E) enthalten.

8. Verfahren zur Herstellung der Zusammensetzungen gemäß einem oder mehreren der Ansprüche 1 bis 7 durch Vermischen der einzelnen Bestandteile.

9. Formkörper, hergestellt durch Vernetzung der Zusammensetzungen gemäß einem oder mehreren der Ansprüche 1 bis 7 oder hergestellt nach Anspruch 8.

## Claims

1. Compositions crosslinkable by condensation reaction and producible using
(A) organopolysiloxanes of the formula
(R²O)₃₋ₐSiR¹ₐO(SiR₂O)ₙSiR¹ₐ(OR²)₃₋ₐ (I),
where
R may be identical or different and denotes monovalent, optionally substituted hydrocarbon radicals,
R¹ may be identical or different and denotes monovalent, optionally substituted hydrocarbon radicals,
R² may be identical or different and denotes monovalent, optionally substituted hydrocarbon radicals,
a may be identical or different and is 0 or 1, and
n is an integer from 380 to 2000,
with the proviso that the viscosity at 25°C, determined by the method indicated in the description, is greater than or equal to 6000 mPas and R¹ is phenyl radical, radical -CH₂-NR^{6'}R^{5'} or the radical CH₂NR^{11'}, where R^{5'} denotes hydrocarbon radicals having 1 to 12 carbon atoms, R^{6'} denotes hydrogen atom or radical R^{5'}, and R^{11'} denotes divalent hydrocarbon radicals which may be interrupted by heteroatoms,
(B1) silanes of the formula
R³_{4-b}(R⁴O)_{b}Si (II),
in which
R³ may be identical or different and denotes a monovalent, SiC-bonded, optionally substituted hydrocarbon radical,
R⁴ may be identical or different and denotes a monovalent, optionally substituted hydrocarbon radical, and
b is 2, 3 or 4,
with the proviso that the molecular weight of the silanes of the formula (II) is greater than 195 g/mol,
and optionally
(B2) silicon compounds consisting of units of the formula
R⁷_{c}(R⁸O)_{d}SiO_{(4-c-d)/2} (III),
in which
R⁷ may be identical or different and denotes a monovalent, SiC-bonded, optionally substituted hydrocarbon radical, R⁸ may be identical or different and denotes a monovalent, optionally substituted hydrocarbon radical,
c is 0, 1 or 2, and
d is 0, 1, 2 or 3,
with the proviso that in formula (III) the sum c+d is ≤3, there are at least 2 groups (R⁸O) present in the silicon compounds, and the viscosity at 25°C is less than 2000 mPas,
with the proviso that the composition contains organosilicon compounds having a molecular weight of less than or equal to 195 g/mol maximally in amounts of less than 0.5 wt%, based on organopolysiloxane (A).

2. Compositions according to Claim 1, **characterized in that** the radicals R³ are linear, branched or cyclic hydrocarbon radicals having 1 to 16 carbon atoms or are monovalent hydrocarbon radicals that have 1 to 12 carbon atoms and are substituted by amino groups on the carbon atom bonded to the silicon atom.

3. Compositions according to Claim 1 or 2, **characterized in that** component (B1) comprises tetraethoxysilane, 2,2,4-trimethylpentyltrimethoxysilane, (2,3,5,6-tetrahydro-1,4-oxazin-4-yl)methyltriethoxysilane, phenyltrimethoxysilane or n-hexadecyltrimethoxysilane.

4. Compositions according to one or more of Claims 1 to 3, **characterized in that** they comprise component (B1) in amounts of 0.5 to 7 parts by weight, based on 100 parts by weight of component (A).

5. Compositions according to one or more of Claims 1 to 4, **characterized in that** they comprise organosilicon compounds having a molecular weight of less than or equal to 195 g/mol maximally in amounts of less than 0.1 wt%, based on organopolysiloxane (A).

6. Compositions according to one or more of Claims 1 to 5, **characterized in that** they are compositions producible using
(A) organopolysiloxanes of the formula (I),
(B1) silanes of the formula (II),
(B2) silicon compounds consisting of units of the formula (III),
optionally (C) adhesion promoters,
optionally (D) curing accelerators,
optionally (E) plasticizers,
optionally (F) fillers, and
optionally (G) additives.

7. Compositions according to one or more of Claims 1 to 6, **characterized in that** they contain no plasticizers (E) .

8. Method for producing the compositions according to one or more of Claims 1 to 7 by mixing of the individual constituents.

9. Shaped article produced by crosslinking the compositions according to one or more of Claims 1 to 7 or produced according to Claim 8.

## Revendications

1. Masses réticulables par réaction de condensation, qui peuvent être préparées en utilisant
(A) des organopolysiloxanes de formule
(R²O)₃₋ₐSiR¹ₐO(SiR₂O)ₙSiR¹ₐ(OR²)₃₋ₐ (I),
dans laquelle
R peut être identique ou différent et désigne des radicaux hydrocarbonés monovalents éventuellement substitués,
R¹ peut être identique ou différent et désigne des radicaux hydrocarbonés monovalents éventuellement substitués,
R² peut être identique ou différent et désigne des radicaux hydrocarbonés monovalents éventuellement substitués,
a peut être identique ou différent et vaut 0 ou 1 et
n désigne un nombre entier de 380 à 2 000,
à condition que la viscosité à 25°C, déterminée selon la méthode indiquée dans la description, soit supérieure ou égale à 6 000 mPas et que R¹ soit un radical phényle, un radical -CH₂-NR^{6'}R^{5'} ou le radical CH₂NR^{11'}, R^{5'} signifiant des radicaux hydrocarbonés ayant 1 à 12 atomes de carbone, R^{6'} signifiant un atome d'hydrogène ou le radical R^{5'} et R^{11'} signifiant des radicaux hydrocarbonés divalents qui peuvent être interrompus par des hétéroatomes,
(B1) des silanes de formule
R³_{4-b}(R⁴O)_{b}Si (II)
dans laquelle
R³ peut être identique ou différent et signifie un radical hydrocarboné monovalent, lié à SiC, éventuellement substitué,
R⁴ peut être identique ou différent et signifie un radical hydrocarboné monovalent éventuellement substitué et
b vaut 2, 3 ou 4,
à condition que le poids moléculaire des silanes de formule (II) soit supérieur à 195 g/mole,
et éventuellement
(B2) des composés de silicium constitués de motifs de formule
R⁷_{c}(R⁸O)_{d}SiO_{(4-c-d)/2} (III)
dans laquelle
R⁷ peut être identique ou différent et signifie un radical hydrocarboné monovalent, lié à SiC, éventuellement substitué,
R⁸ peut être identique ou différent et signifie un radical hydrocarboné monovalent éventuellement substitué,
c vaut 0, 1 ou 2 et
d vaut 0, 1, 2 ou 3,
à condition que, dans la formule (III), la somme soit c + d ≤ 3, que dans les composants de silicium, au moins 2 groupes (R⁸O) soient présents et que la viscosité à 25 °C soit inférieure à 2 000 mPas,
à condition que les masses contiennent des composés organosiliciés présentant un poids moléculaire inférieur ou égal à 195 g/mole au maximum en des quantités inférieures à 0,5 % en poids, par rapport à l'organopolysiloxane (A).

2. Masses selon la revendication 1, **caractérisées en ce que** les radicaux R³ sont des radicaux hydrocarbonés linéaires, ramifiés ou cycliques ayant 1 à 16 atomes de carbone ou des radicaux hydrocarbonés monovalents ayant 1 à 12 atomes de carbone, substitués au niveau de l'atome de carbone lié à l'atome de silicium, par des groupes amino.

3. Masses selon la revendication 1 ou 2, **caractérisées en ce que** le composant (B1) est le tétraéthoxysilane, le 2,2,4-triméthylpentyltriméthoxysilane, le (2,3,5,6-tétrahydro-1,4-oxazin-4-yl)méthyltriéthoxysilane, le phényltriméthoxysilane ou le n-hexadécyltriméthoxysilane.

4. Masses selon l'une ou plusieurs des revendications 1 à 3, **caractérisées en ce qu'**elles contiennent le composant (B1) en des quantités allant de 0,5 à 7 parties en poids, par rapport à 100 parties en poids de composant (A).

5. Masses selon l'une ou plusieurs des revendications 1 à 4, **caractérisées en ce qu'**elles contiennent des composés organosiliciés présentant un poids moléculaire inférieur ou égal à 195 g/mole au maximum en des quantités inférieures à 0,1 % en poids, par rapport à l'organopolysiloxane (A).

6. Masses selon l'une ou plusieurs des revendications 1 à 5, **caractérisées en ce qu'**elles peuvent être préparées en utilisant
(A) des organopolysiloxanes de formule (I),
(B1) des silanes de formule (II),
(B2) des composés de silicium constitués de motifs de formule (III),
éventuellement (C) des promoteurs d'adhérence,
éventuellement (D) des accélérateurs de durcissement,
éventuellement (E) des plastifiants,
éventuellement (F) des charges et
éventuellement (G) des additifs.

7. Masses selon l'une ou plusieurs des revendications 1 à 6, **caractérisées en ce qu'**elles ne contiennent pas de plastifiants (E).

8. Procédé de préparation des compositions selon l'une ou plusieurs des revendications 1 à 7 par mélange des composants individuels.

9. Corps moulé préparé par réticulation des compositions selon l'une ou plusieurs des revendications 1 à 7 ou préparé selon la revendication 8.
